# EUROPÄISCHE PATENTSCHRIFT

(11) **EP 0 354 990 B1**
(45) Veröffentlichungstag und Bekanntmachung des Hinweises auf die Patenterteilung: **26.04.1995**
(21) Anmeldenummer: 89112184.0
(22) Anmeldetag: 04.07.1989
(51) Int. Cl.: H04Q 7/20, H04B 7/26

(54) **Verfahren zum Verbindungsaufbau für ein mehrere Sprachkanäle und einen Organisationskanal umfassendes Bündelfunknetz**
Method for setting up a communication for a trunked radio network with a plurality of voice channels and a control channel
Méthode d'établissement de communication pour un réseau de radio-concentration à plusieurs canaux de parole et un canal de service

(30) Priorität: 18.08.1988 DE 3828003
(43) Veröffentlichungstag der Anmeldung: 21.02.1990
(73) Patentinhaber: ROBERT BOSCH GMBH, 70442 Stuttgart (DE)
(72) Erfinder: Dallmann, Horst, D-1000 Berlin 13 (DE); Wazeck, Jürgen, Dr. Dipl.-Ing, D-1000 Berlin 28 (DE)

(56) Entgegenhaltungen:
- ONDE ELECTRIQUE, Band 64, Nr. 3, Mai-Juni 1984, Seiten 41-46, Argentin-sur-Creuse, FR; M. CANITROT: "Radiotéléphone automatique à relais communs"

## Beschreibung

Die Erfindung betrifft ein Verfahren zum Verbindungsaufbau für ein mehrere Sprachkanäle und einen Organisationskanal umfassendes Bündelfunknetz.

### Stand der Technik

Es ist ein derartiges Bündelfunknetz bekannt (Funkspiegel, 1988, Heft 2, Seiten 3 bis 6), das insofern nachteilig ist, weil es die Funkkanäle unnötig lange belastet; denn die an einer Gesprächsverbindung beteiligten mobilen Funkstationen erhalten von einer zentralen Funksteuerung nacheinander ein Umschalttelegramm, mit dem ihnen ein freier Sprechkanal zugewiesen wird. Darüber hinaus kann sich die Zeit für das Zustandekommen einer Verbindung dadurch verlängern, daß ein Umschalttelegramm von der gerufenen mobilen Funkstation verstümmelt empfangen oder nicht durch Quittungstelegramm bestätigt wird, so daß die zentrale Funksteuerung das Umschalttelegramm noch einmal nacheinander an beide mobilen Funkstationen aussenden muß.

### Aufgabe

Der Erfindung liegt die Aufgabe zugrunde, ein Verfahren zum Verbindungsaufbau für ein mehrere Sprachkanäle und einen Organisationskanal umfassendes Bündelfunknetz der gattungsgemäßenn Art derart weiterzubilden, daß die für den Verbindungsaufbau benötigte Zeit verkürzt wird.

### Lösung und erzielbare Vorteile

Diese Aufgabe wird bei einem gattungsgemäßen Verfahren durch die Merkmale des Anspruchs 1 gelöst. Der mit der Erfindung erzielbare Vorteil besteht insbesondere darin, daß die Zeit für den Verbindungsaufbau reduziert wird.

### Beschreibung eines Ausführungsbeispiels

Ein Ausführungsbeispiel der Erfindung ist in der Zeichnung an Hand mehrerer Figuren dargestellt und wird im folgenden näher beschrieben. Es zeigen
- Fig. 1: ein Blockschaltbild des erfindungsgemäßen Bündelfunknetzes,
- Fig. 2: ein Datentelegramm und
- Fig. 3: ein Zeitschema für das Ruftelegramm, das Umschalttelegramm und die Quittungstelegramme.

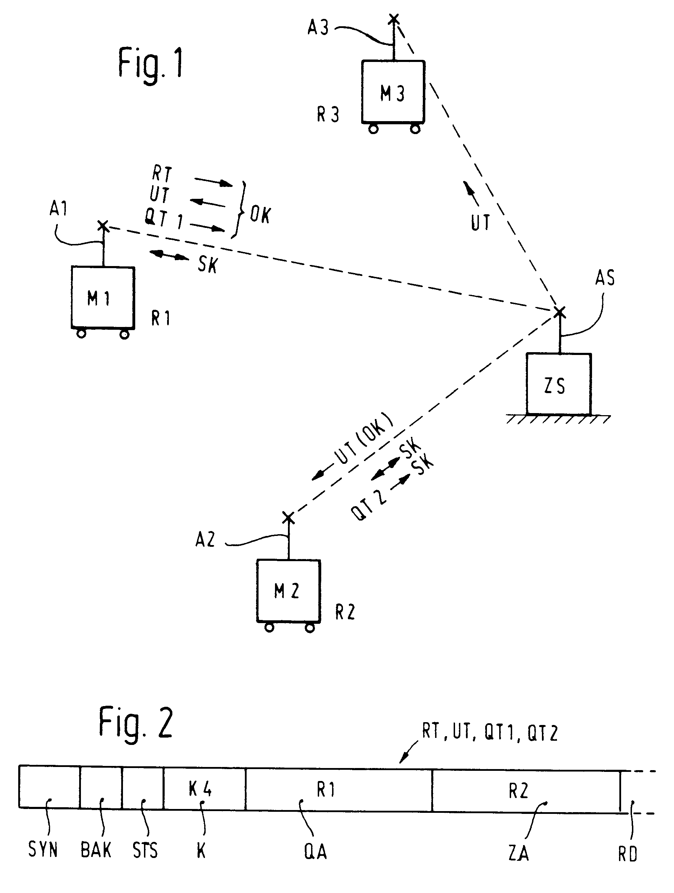

Das in Fig. 1 ausschnittweise dargestellte Bündelfunknetz umfaßt eine ortsfeste zentrale Funksteuerung ZS, zu der mehrere mobile Funkstationen, zum Beispiel M1, M2, M3, gehören. Die zentrale Funksteuerung ZS hat eine Funksende- und -empfangsantenne AS, und die mobilen Funkstationen M1, M2 und M3 weisen je eine Funksende- und -empfangsantenne A1, A2, A3 auf.

Jede mobile Funkstation hat eine individuelle Rufnummer R1, R2, R3.

Will eine mobile Funkstation, zum Beispiel die mobile Funkstation M1, mit einer anderen mobilen Funkstation, zum Beispiel der mobilen Funkstation M2, in Verbindung treten, so sendet die mobile Funkstation M1 auf einem Organisationskanal OK ein Ruftelegramm RT aus, das vorzugsweise den aus Fig. 2 ersichtlichen Aufbau hat. Das Ruftelegramm enthält in einem ersten Teil SYN eine Information zur Bit- und Blocksynchronisation, in einem zweiten Teil BAK eine Information über ein Betriebsartenkennzeichen (entsprechend der Bedeutung des Ruftelegramms), in einem dritten Teil STS eine Kurzinformation für das mobile Teilnehmergerät, in einem vierten Teil K eine Funkkanalnummer, in einem fünften Teil QA die Quelladresse, das heißt die Kennung bzw. Rufnummer R1 der rufenden mobilen Funkstation M1, und in einem sechsten Teil ZA die Zieladresse bzw. die Rufnummer R2 der gewünschten mobilen Funkstation M2. An den sechsten Teil des Ruftelegramms RT kann sich noch ein redundanter Teil RD anschließen, der Informationen zur Datensicherung enthält.

Das von der zentralen Funksteuerung ZS empfangene Ruftelegramm RT veranlaßt dort die Aussendung eines Umschalttelegramms UT auf dem Organisationskanal OK. Das Umschalttelegramm UT hat denselben Aufbau wie das Ruftelegramm RT (Fig. 2). In dem vierten Teil K des Umschalttelegramms setzt die zentrale Funksteuerung ZS die Nummer eines freien Sprechkanals SK ein. Das von zentralen Funksteuerung ZS ausgesendete Umschalttelegramm UT wird von der nach dem Aussenden des Ruftelegramms RT automatisch auf Empfang geschalteten mobilen Funkstation M1 sowie von den im Ruhezustand auf Empfang geschalteten mobilen Funkstationen M2 und M3 empfangen; aber nur die mobilen Funkstationen M1 und M2 erkennen bei der Auswertung von Quelladresse QA und Zieladresse ZA des empfangenen Umschalttelegramms UT, daß dieses Telegramm für sie bestimmt ist.

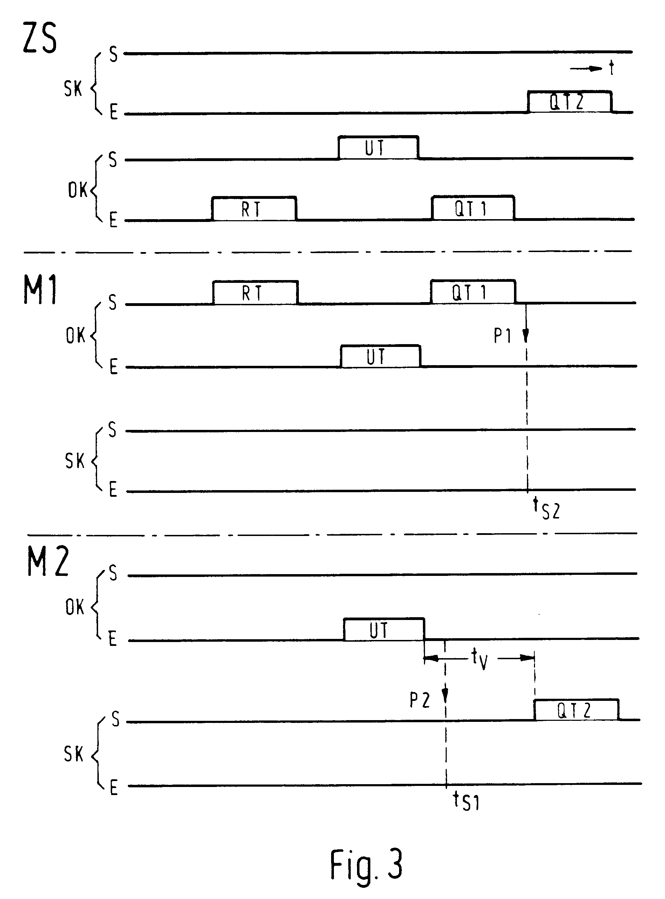

Die mobile Funkstation M1 quittiert den Empfang des Umschalttelegramms UT durch ein Quittungstelegramm QT1, das den gleichen Aufbau wie das Ruftelegramm RT (Fig. 2) hat und das als Betriebsartenkennzeichen BAK eine Quittungsinformation enthält. Im Anschluß an die Aussendung des Quittungstelegramms QT1 durch die mobile Funkstation M1 schaltet sich diese Funkstation auf den zugewiesenen freien Sprechkanal SK (vgl. Pfeil P1 in Fig. 3). Empfängt die zentrale Funksteuerung ZS kein Quittungstelegramm von einer der mobilen Funkstationen M1 ..., so sendet die zentrale Funksteuerung gleichzeitig auf dem Organisationskanal OK und dem zugewiesenen Sprechkanal SK das Umschalttelegramm UT aus.

Die gerufene mobile Funkstation M2 schaltet sich unmittelbar nach dem Empfang des Umschalttelegramms UT ebenfalls auf den zugewiesenen Sprechkanal SK (vgl. Pfeil P2) und quittiert mit einer Zeitverzögerung t_{V} anschließend den Empfang des Umschalttelegramms UT durch ein Quittungstelegramm QT2, das sie über den zugewiesenen Sprechkanal an die zentrale Funksteuerung ZS sendet.

In beiden mobilen Funkstationen M1 und M2 läuft also das Aussenden der Quittungstelegramme QT1 und QT2 sowie das Umschalten auf den zugewiesenen Sprechkanal SK in umgekehrter Reihenfolge ab, so daß sich beide mobilen Funkstationen etwa zur gleichen Zeit im sprechbereiten Zustand befinden; vgl. Zeitschema nach Fig. 3, Zeitpunkte t_{S1}, t_{S2}.

Der erzielbare Vorteil liegt im gleichzeitigen Ablauf der beiden Quittungen auf verschiedenen Kanälen, wodurch Kanalbelegungszeiten des Organisationskanals reduziert werden, was wiederum zur Folge hat, daß mehr Funkteilnehmer bedient werden können.

Wird kein Quittungstelegramm QT2 der gerufenen mobilen Funkstation M2 in der zentralen Funksteuerung ZS auf dem Sprechkanal SK empfangen, bedeutet dies entweder, daß die gerufene mobile Funkstation M2 das Umschalttelegramm UT nicht empfangen hat oder daß das Quittungssignal QT2 der mobilen Funkstation M2 bei der Übertragung über den zugewiesenen Sprechkanal verlorengegangen ist. In diesen Fällen sendet die zentrale Funksteuerung ZS über den Organisationskanal OK und über den Sprechkanal SK erneut das gleiche Umschalttelegramm UT aus. Die rufende mobile Funkstation M1, die bereits auf den zugewiesenen Sprechkanal umgeschaltet ist, verhält sich dabei passiv und hört über den Sprechkanal SK die erneute Übermittlung des Umschalttelegramms UT mit.

In schlecht versorgten Bündelfunknetzen wird zur Erhöhung der Zustellsicherheit der Umschalttelegramme UT grundsätzlich jedes Umschalttelegramm zwei- oder mehrmals hintereinander ausgesendet. Wird der Teilnehmer der gerufenen mobilen Funkstation M2 nicht erreicht, so wird die durch das Umschalttelegramm UT bereits auf den Sprechkanal SK umgeschaltete mobile Funkstation M1 durch ein von der zentralen Funksteuerung ZS auf dem Sprechkanal SK ausgesendetes Rückschalttelegramm und ein dadurch bewirktes Abschalten des HF-Trägers auf den Organisationskanal OK zurückgeschaltet. Das Rückschalttelegramm hat vorzugsweise den gleichen Aufbau wie das Ruftelegramm RT in Fig. 2, wobei als Betriebsartenkennzeichen BAK des Rückschalttelegramms eine diese Telegrammart kennzeichnende Information enthalten ist.

## Patentansprüche

1. Verfahren zum Verbindungsaufbau für ein mehrere Sprechkanäle und einen Organisationskanal umfassendes Bündelfunknetz mit einer zentralen Funksteuerung und mehreren mobilen Funkstationen, wobei eine mobile Funkstation ihren Gesprächswunsch mittels eines die eigene Kennung und die Rufnummer der gewünschten mobilen Funkstation enthaltenden Ruftelegramms über den Organisationskanal an die zentrale Funksteuerung aussendet, die die gewünschte mobile Funkstation mittels eines Umschalttelegramms ruft, das unter anderem die Rufnummer der gewünschten mobiler Funkstaticn und die Nummer eines freien Sprechkanals enthält, und wobei die gerufene mobile Funkstation als Empfangsbestätigung ein Quittungstelegramm an die zentrale Funksteuerung sendet, **dadurch gekennzeichnet**, daß die mobile Funkstation (M1), die ein Ruftelegramm (RT) ausgesendet hat, den Organisationskanal (OK) auf das Vorhandensein des für die gerufene mobile Funkstation (M2) bestimmten Umschalttelegramms (UT) untersucht und bei positivem Untersuchungsergebnis ein Quittungstelegramm (QT1) auf dem Organisaticnskanal (OK) an die zentrale Funksteuerung (ZS) aussendet und anschließend auf den zugewiesenen Sprechkanal (SK) umschaltet, während die gerufene mobile Funkstation (M2) nach dem Empfang des Umschalttelegramms sofort auf den zugewiesenen Sprechkanal umschaltet und anschließend ein Quittungstelegramm (QT2) auf dem Sprechkanal (SK) an die zentrale Funksteuerung (ZS) aussendet.

2. Verfahren nach Anspruch 1, dadurch gekennzeichnet, daß bei einem unterversorgten Bündelfunknetz das Umschalttelegramm (UT) zwei- oder mehrmals nacheinander von der zentralen Funksteuerung (ZS) ausgesendet wird.

3. Verfahren nach Anspruch 1, dadurch gekennzeichnet, daß das Umschalttelegramm (UT) auf dem Organisationskanal (OK) und dem zugewiesenen Sprechkanal (SK) wiederholt ausgesendet wird, wenn kein Quittungstelegramm (QT) einer der mobilen Funkstationen empfangen wurde.

4. Verfahren nach Anspruch 1, 2 oder 3, dadurch gekennzeichnet, daß die Quittungstelegramme (QT) derart zeitlich gestaffelt sind, daß die rufende mobile Funkstation (M1) zuerst auf dem Organisationskanal (OK) und die gerufene mobile Funktstation (M2) nach einer Verzögerung (tᵥ), die etwa der Länge eines Quittungstelegramms entspricht, auf dem ihr zugewiesenen Sprechkanal quittiert.

5. Verfahren nach Anspruch 1 oder 2, dadurch gekennzeichnet, daß eine rufende mobile Funkstation (M1), die bereits durch ein Umschalttelegramm (UT) vom Organisationskanal (OK) auf den zugewiesenen Sprechkanal (SK) geschaltet ist, durch ein von der zentralen Funksteuerung (ZS) auf dem Sprechkanal ausgesendetes Rückschalttelegramm (RT) auf den Organisationskanal zurückgeschaltet wird, wenn der Teilnehmer der gerufenen mobilen Funkstation (M2) nicht erreichbar ist.

6. Verfahren nach Anspruch 1, 2 oder 5, dadurch gekennzeichnet, daß die Datentelegramme (RT, UT, QT1, QT2) einen ersten Teil (SYN) für die Bit- und Blocksynchronisation, einen zweiten Teil (BAK) für ein Betriebsartenkennzeichen, einen dritten Teil (STS) für eine Kurzinformation, einen vierten Teil (K) für eine Funkkanal-Nummer, einen fünften Teil (QA) für eine Quelladresse und einen sechsten Teil (ZA) für eine Zieladresse aufweisen.

## Claims

1. Method for setting up a communication for a trunked radio network comprising a plurality of voice channels and a control channel, having a central radio control and a plurality of mobile radio stations, a mobile radio station transmitting its call request to the central radio control via the control channel by means of a call telegram which contains the identification of the mobile radio station in question and the call number of the desired mobile radio station, the said central radio control calling the desired mobile radio station by means of a switch-over telegram which contains, inter alia, the call number of the desired mobile radio station and the number of a free voice channel, and the called mobile radio station transmitting as confirmation of reception an acknowledgment telegram to the central radio control, characterized in that the mobile radio station (M1) which has transmitted a call telegram (RT) examines the control channel (OK) for the presence of the switch-over telegram (UT) intended for the called mobile radio station (M2) and when there is a positive result of the examination transmits an acknowledgment telegram (QT1) on the control channel (OK) to the central radio control (ZS) and subsequently switches over to the assigned voice channel (SK), while the called mobile radio station (M2) switches over immediately after reception of the switch-over telegram to the assigned voice channel and subsequently transmits an acknowledgment telegram (QT2) on the voice channel (SK) to the central radio control (ZS).

2. Method according to Claim 1, characterized in that in the case of an undersupplied trunked radio network the switch-over telegram (UT) is transmitted successively two or more times by the central radio control (ZS).

3. Method according to Claim 1, characterized in that the switch-over telegram (UT) is repeatedly transmitted on the control channel (OK) and the assigned voice channel (SK) when no acknowledgment telegram (QT) of one of the mobile radio stations has been received.

4. Method according to Claim 1, 2 or 3, characterized in that the acknowledgment telegrams (QT) are staggered in terms of timing in such a way that the calling mobile radio station (M1) firstly transmits an acknowledgment on the control channel (OK) and the called mobile radio station (M2) transmits an acknowledgment on the voice channel assigned to it after a delay (tᵥ) which corresponds approximately to the length of an acknowledgment telegram.

5. Method according to Claim 1 or 2, characterized in that a calling mobile radio station (M1) which is already switched by a switch-over telegram (UT) from the control channel (OK) to the assigned voice channel (SK) is switched back to the control channel by a resetting telegram (RT) transmitted by the central radio control (ZS) on the voice channel when the subscriber of the called mobile radio station (M2) can no longer be reached.

6. Method according to Claim 1, 2 or 5, characterized in that the data telegrams (RT, UT, QT1, QT2) have a first part (SYN) for the bit and block synchronization, a second part (BAK) for an operating-mode identification, a third part (STS) for a brief item of information, a fourth part (K) for a radio channel number, a fifth part (QA) for a source address and a sixth part (ZA) for a target address.

## Revendications

1. Procédé pour établir une communication pour un réseau radio à faisceaux comprenant plusieurs canaux de conversation et un canal d'organisation, avec une commande radio centrale et plusieurs postes radio mobiles, un poste radio mobile émettant une demande de conversation par l'intermédiaire d'un télégramme d'appel contenant sa propre référence ainsi que le numéro d'appel du poste radio mobile, souhaité, par le canal d'organisation vers la commande radio centrale qui appelle le poste radio mobile souhaité à l'aide d'un télégramme de commutation contenant entre autres le numéro d'appel du poste radio mobile demandé ainsi que le numéro d'un canal de conversation libre et le poste radio mobile, appelé, émet comme confirmation de la réception, un télégramme d'acquittement vers la commande radio centrale, procédé caractérisé en ce que le poste radio mobile (M1), qui a émis un télégramme d'appel (RT), examine le canal d'organisation (OK) pour déceler la présence du télégramme de commutation (UT) de ce poste radio mobile (M2), appelé, et en cas de résultat positif de l'examen, il émet un télégramme d'acquittement (QT1) sur le canal d'organisation (OK) à destination de la commande radio centrale (ZS), puis se commute sur le canal de conversation (SK) attribué alors que le poste radio (M2), mobile, appelé, après le réception du télégramme de commutation, commute immédiatement sur le canal de conversation attribué puis émet un télégramme d'acquittement (QT2) sur le canal de conversation (SK) à destination de la commande radio centrale (ZS).

2. Procédé selon la revendication 1, caractérisé en ce que pour un réseau radio à faisceaux, sous alimenté, le télégramme de commutation (UT) est émis deux ou plusieurs fois successives par la commande radio centrale (ZS).

3. Procédé selon la revendication 1, caractérisé en ce que le télégramme de commutation (UT) est émis de manière répétée par le canal d'organisation (OK) et le canal de conversation (SK) attribué, lorsqu'aucun télégramme d'acquittement (QT) n'a été reçu par l'un des postes radio mobiles.

4. Procédé selon la revendication 1, 2 ou 3, caractérisé en ce que les télégrammes d'acquittement (QT) sont échelonnés dans le temps de façon que le poste radio mobile appelant (M1) correspond tout d'abord sur le canal d'organisation (OK) et le poste radio mobile appelé (M2), après une temporisation (tv) qui correspond sensiblement à la durée d'un télégramme d'acquittement, vers le canal de conversation attribué.

5. Procédé selon la revendication 1 ou 2, caractérisé en ce qu'un poste radio mobile (M1), appelant, qui a déjà été commuté par un télégramme de commutation (UT) du canal d'organisation (OK) sur le canal de conversation (SK), attribué, est commuté en retour sur le canal d'organisation par un télégramme de commutation en retour (RT) émis sur le canal de conversation par la commande radio centrale (ZS) lorsque l'abonné du poste radio mobile, appelant (M2) n'a pu être atteint.

6. Procédé selon la revendication 1, 2 ou 5, caractérisé en ce que les télégrammes de données (RT, UT, QT1, QT2) ont une première partie (SYN) pour la synchronisation de bit et de bloc, une seconde partie (BAK) pour une référence de mode de fonctionnement, une troisième partie (STS) pour une information abrégée, une quatrième partie (K) pour un numéro de canal, une cinquième partie (QA) pour une adresse de source et une sixième partie (ZA) pour une adresse de destination.
